# EUROPÄISCHE PATENTSCHRIFT

(11) **EP 3 638 545 B1**
(45) Veröffentlichungstag und Bekanntmachung des Hinweises auf die Patenterteilung: **01.09.2021**
(21) Anmeldenummer: 18726446.0
(22) Anmeldetag: 18.05.2018
(51) Int. Cl.: B60R 13/08

(54) **TEXTILGEBILDE FÜR EIN VERKLEIDUNGSELEMENT EINES KRAFTFAHRZEUGS UND VERFAHREN ZU DESSEN HERSTELLUNG**
TEXTILE STRUCTURE FOR A TRIM ELEMENT OF A MOTOR VEHICLE AND METHOD FOR PRODUCTION THEREOF
STRUCTURE TEXTILE POUR ÉLÉMENT D'HABILLAGE D'UN VÉHICULE À MOTEUR, ET SON PROCÉDÉ DE FABRICATION

(30) Priorität: 16.06.2017 DE 102017210091
(43) Veröffentlichungstag der Anmeldung: 22.04.2020
(73) Patentinhaber: Volkswagen Aktiengesellschaft, 38440 Wolfsburg (DE)
(72) Erfinder: GREGUS, Stephan, 38442 Wolfsburg (DE); MARSCHALL, Uwe, 38442 Wolfsburg (DE); REITMEIER, Christian, 38118 Braunschweig (DE)
(86) Internationale Anmeldenummer: PCT/EP2018/063176
(87) Internationale Veröffentlichungsnummer: WO 2018/228780

(56) Entgegenhaltungen:
- EP-A1- 0 940 276
- EP-A1- 2 236 286
- DE-A1- 4 126 884

## Beschreibung

Die Erfindung betrifft nach einem ersten Aspekt der Erfindung ein Textilgebilde gemäß dem Oberbegriff des Patentanspruchs 1.

Nach einem zweiten Aspekt der Erfindung betrifft die Erfindung ein Verkleidungselement für einen Fahrgastraum eines Kraftfahrzeugs, insbesondere zur Verkleidung einer A-Säule.

Ein dritter Aspekt der Erfindung betrifft ein Verfahren zur Herstellung eines Textilgebildes.

Die DE 41 26 884 A1 beschreibt ein schalldämmendes Formteil für ein Kraftfahrzeug. Es besitzt eine Fasern aufweisende formstabile Trägerschicht, auf die eine Vliesschicht aufgebracht ist. Die Trägerschicht besteht aus einem porösen, luftdurchlässigen, faserverstärkten Polypropylen. Auf diese Weise kann ein gutes Schalldämmverhalten mit einer hohen Umweltverträglichkeit verbunden werden.

Die EP 0 940 276 A1 offenbart eine Einrichtung zum Schutz eines Innenraums eines Kampfpanzers gegen Aufheizung durch Sonneneinstrahlung. Beabstandet zu einer Fahrzeugaußenwand sind innenraumseitig aus wärmeisolierendem Material hergestellte Abschirmplatten an der Fahrzeugaußenwand angeordnet. Das Material der Abschirmplatten kann zusätzlich einen Splitterschutz gewähren. Beabstandet zu den Abschirmplatten können innenraumseitig wenigstens bereichsweise Schallschluckmatten montiert sein, welche aus einem großporigen Schaumstoff gefertigt sind. Die Schallschluckmatten sollen einen im Fahrzeuginnenraum erzeugten Schall absorbieren, um den Schallpegel erhöhende Schallreflexionen zu unterbinden.

Die Erfindung hat die Aufgabe ein gattungsgemäßes Textilgebilde dahingehend zu verbessern, dass die Verbreitungsgefahr von Fragmenten (Bruchstücken) des Verkleidungselements bei einer stoßartigen Belastung des Verkleidungselements reduziert wird und das Textilgebilde an unterschiedliche Konturen des Verkleidungselements anpassbar ist.

Die Erfindung löst die gestellte Aufgabe nach einem ersten Aspekt der Erfindung mit einem Textilgebilde der eingangs genannten Art gemäß dem kennzeichnenden Teil des Patentanspruchs 1. Das Textilgebilde kann somit Schallwellen absorbieren und gleichzeitig der Verbreitung von Fragmenten (Bruchstücken) des Verkleidungselements entgegenwirken. Wenn das Textilgebilde beispielsweise hinter einer Karosseriesäulenverkleidung oder hinter einer Verkleidung im Bereich einer Instrumententafel angeordnet ist, so dämmt es Wind-, Roll- oder Motorgeräusche. Wenn das Textilgebilde im Bereich eines Airbags montiert ist, so kann es aufgrund der mindestens einen Fragmentschutzschicht die Verbreitung von Fragmenten (Bruchstücken) des mindestens einen Verkleidungselements reduzieren, die beispielsweise beim stoßartigen Austreten des Airbags oder bei einer anderen stoßartigen Belastung auf das Verkleidungselement auftreten können. Durch den Verbund sind die mindestens eine Dämmschicht und die mindestens eine Fragmentschutzschicht fest miteinander verbunden. Auf diese Weise unterstützt die mindestens eine Dämmschicht die Wirkung der Fragmentschutzschicht. Ferner trägt die Fragmentschutzschicht zur Absorption von Schallwellen bei. Folglich erfüllen die mindestens eine Dämmschicht und die mindestens eine Fragmentschutzschicht neben ihrer ursprünglichen Funktion noch eine weitere. Infolge dieser Doppelfunktionalität können die mindestens eine Dämmschicht und die mindestens eine Fragmentschutzschicht geringer dimensioniert werden, als dies erforderlich wäre, wenn die mindestens eine Dämmschicht und die mindestens eine Fragmentschutzschicht separat voneinander hinter dem Verkleidungselement angeordnet würden. Dies ist besonders dann von Vorteil, wenn der für das Textilgebilde zur Verfügung stehende Bauraum nur gering ist und Material sowie Kosten gespart werden sollen. Ferner lassen sich durch den Verbund die mindestens eine Dämmschicht und die mindestens eine Fragmentschutzschicht gleichzeitig an der Rückseite des Verkleidungselements anbringen, wenn das Textilgebilde an der Rückseite des Verkleidungselements angebracht wird. Dies spart im Vergleich zu einer separaten Montage der mindestens einen Dämmschicht und der mindestens einen Fragmentschutzschicht Montageschritte ein.

Bei dem Textilgebilde handelt es sich um ein biegeschlaffes Bauteil, sodass es sich sehr gut an unterschiedliche Konturverläufe des Verkleidungselements anpassen lässt.

Abhängig von den Einbaubedingungen und den Anforderungen an die Dämpfungswirkung und die Festigkeit des Textilgebildes respektive der mindestens einen Dämmschicht und der mindestens einen Fragmentschutzschicht kann die mindestens eine Dämmschicht und/oder die mindestens eine Fragmentschutzschicht aus einem Vlies, Gewebe, Gewirk, Gestrick, Gelege oder Geflecht hergestellt sein. Bei dem Vlies kann es sich vorzugsweise um ein mehrlagiges Feinfaservlies, das hinsichtlich der Schalldämmung günstige Eigenschaften aufweist, oder um ein thermoplastgebundenes Faservlies handeln.

Ebenfalls abhängig von den Einbaubedingungen und den Anforderungen bezüglich der Dämpfungs- und der Fragmentschutzwirkung können das Textilgebilde respektive die mindestens eine Dämmschicht und die mindestens eine Fragmentschutzschicht aus Glasfasern, Polymerfasern, insbesondere aus Polyethylen- und/oder aus Polyamidfasern, Naturfasern, vorzugsweise solche mit einer Viskosebasis, Mineralfasern oder aus diesen Fasern erzeugten Rovings hergestellt werden.

Zur Bildung des Verbunds können die mindestens eine Dämmschicht und die mindestens eine Fragmentschutzschicht mit einer Verbindungsschicht miteinander verbunden sein. Für die Verbindungsschicht kann ein Klebstoff, beispielsweise ein Acrylatklebstoff, eingesetzt werden. Es ist jedoch auch möglich für die Verbindungsschicht ein bei Wärmezufuhr aufschmelzendes Material zu verwenden, wie beispielsweise einen Schmelzklebstoff oder einen Thermoplasten. Die mindestens eine Dämmschicht und die mindestens eine Fragmentschutzschicht können durch einen Walzvorgang zum Verbund vereinigt werden.

Die mindestens eine Dämmschicht entfaltet eine besonders gute schallabsorbierende Wirkung, wenn die Dicke der mindestens einen Dämmschicht ein Vielfaches der Dicke der mindestens einen Fragmentschutzschicht beträgt oder übersteigt.

Um das mindestens eine Textilgebilde an dem Verkleidungselement befestigen zu können, kann die mindestens eine Fragmentschutzschicht wenigstens teilweise mit einer Klebeschicht versehen sein. Die Klebeschicht kann somit wenigstens teilweise die mindestens eine Fragmentschutzschicht abdecken. Folglich kann die mindestens eine Fragmentschutzschicht wenigstens teilweise an dem Verkleidungselement befestigt werden. Auf diese Weise kann die Fragmentschutzschicht die Verbreitung von Fragmenten (Bruchstücken) des Verkleidungselements im Fahrgastraum zuverlässig reduzieren. Wenn beispielsweise der Airbag oder ein anderer Ausgangspukt einer stoßartigen Beanspruchung sich nur in einem Teilbereich des Verkleidungselements befindet, so genügt es, wenn nicht die gesamte Fragmentschutzschicht, sondern nur ein Teil von ihr mit der Klebeschicht ausgerüstet ist.

Mehrere Fragmentschutzschichten können übereinander angeordnet sein, wobei zwischen zwei benachbarten Fragmentschutzschichten eine Fügeschicht aufgebracht ist. Die Fügeschicht kann die beiden benachbarten Fragmentschutzschichten miteinander verbinden. Sie dient somit der Herstellung des Verbunds. Durch diesen Aufbau des Textilgebildes kann die Wirkung der Fragmentschutzschichten erhöht werden. Es kann eine standardisierte Fragmentschutzschicht mit standardisierten Abmessungen hergestellt werden. Wenn mehrere standardisierte Fragmentschutzschichten übereinander angeordnet werden, so kann mit ihnen eine höhere Fragmentschutzwirkung erreicht werden, als mit einer einzigen Fragmentschutzschicht mit einer größeren Dicke. Außerdem vereinfacht die standardisierte Fragmentschutzschicht die Herstellung.

Ebenfalls können mehrere Dämmschichten übereinander angeordnet werden, wobei zwischen zwei benachbarten Dämmschichten eine Befestigungsschicht aufgebracht ist. Zur Herstellung des Verbunds kann die Befestigungsschicht die beiden benachbarten Dämmschichten miteinander verbinden. Somit kann die schallabsorbierende Wirkung erhöht werden. Eine standardisierte Dämmschicht mit standardisierter Abmessung kann ebenfalls verwendet werden. Die Befestigungsschicht weist vorzugsweise schallabsorbierende Eigenschaften auf.

Auf der mindestens einen Dämmschicht kann eine Schutzschicht aufgebracht werden, welche die freie Seite der mindestens einen Dämmschicht beim Transport und bei der Montage schützt. Zweckmäßigerweise kann die Schutzschicht schallabsorbierende Eigenschaften aufweisen.

Die Erfindung betrifft außerdem nach einem zweiten Aspekt der Erfindung ein Verkleidungselement für den Fahrgastraum des Kraftfahrzeugs, insbesondere zur Verkleidung einer Karosseriesäule, wobei erfindungsgemäß das Verkleidungselement das Textilgebilde nach einem der Ansprüche 1 bis 9 aufweist. In einer bevorzugten Ausführungsform kann das Textilgebilde vorzugsweise mit der Klebeschicht wenigstens teilweise mit dem Verkleidungselement verbunden sein.

Ein dritter Aspekt der Erfindung betrifft ein Verfahren zur Herstellung eines Textilgebildes nach einem der Ansprüche 1 bis 9, welches erfindungsgemäß durch folgende Schritte gekennzeichnet ist:
a) Herstellen der mindestens einen Dämmschicht und der mindestens einen Fragmentsch utzschicht,
b) Aufbringen einer Verbindungsschicht auf die mindestens eine Dämmschicht und/oder auf die mindestens eine Fragmentschutzschicht,
c) Verbinden der mindestens einen Dämmschicht und der mindestens einen Fragmentsch utzschicht.

Mit dem Verfahren kann auch ein mehrere benachbarte Fragmentschutzschichten aufweisendes Textilgebilde hergestellt werden, wobei
a) auf die zuvor hergestellte Fragmentschutzschicht eine Fügeschicht aufgebracht wird,
b) eine weitere Fragmentschutzschicht auf die Fügeschicht aufgebracht und mit der zuvor hergestellten Fragmentschutzschicht verbunden wird,
c) Wiederholung von Schritt a) und b) bis die gewünschte Anzahl von Fragmentschutzschichten hergestellt ist.

Die Fügeschicht kann, wenn sie auf die zuvor hergestellte Fragmentschutzschicht aufgebracht wird, gleichzeitig auch auf die weitere Fragmentschutzschicht aufgebracht werden. Ein Zusammenfügen der Fragmentschutzschichten kann beispielsweise durch Wärmezufuhr geschehen.

In einem weiteren Verfahrensschritt kann auf die mindestens eine Fragmentschutzschicht die Klebeschicht aufgebracht werden, wobei die Klebeschicht mindestens teilweise die freie Seite der Fragmentschutzschicht abdeckt.

Ebenso ist es möglich mit dem Verfahren ein mehrere benachbarte Dämmschichten aufweisendes Textilgebilde herzustellen, wobei
a) auf die zuvor hergestellte Dämmschicht eine Befestigungsschicht aufgebracht wird,
b) eine weitere Dämmschicht auf die Befestigungsschicht aufgebracht und mit der zuvor hergestellten Dämmschicht verbunden wird,
c) Wiederholung von Schritt a) und b) bis die gewünschte Anzahl von Dämmschichten hergestellt ist.

Durch einen zusätzlichen Verfahrensschritt kann auf die mindestens eine Dämmschicht die Fragmentschutzschicht aufgebracht werden.

In einem abschließenden Verfahrensschritt kann das Textilgebilde auf die gewünschten Abmessungen zugeschnitten werden.

Nachfolgend werden Ausführungsbeispiele der Erfindungen anhand der beiliegenden Zeichnungen näher erläutert.

Im Einzelnen zeigen:
- Fig. 1: eine schematisierte Schnittansicht auf ein Verkleidungselement und ein Textilgebilde gemäß der Erfindung in einem ersten Montageschritt;
- Fig. 2: die schematisierte Schnittansicht auf das Verkleidungselement und das Textilgebilde aus Fig. 1 in einem zweiten Montageschritt;
- Fig. 3: eine erste Ausführungsform des Textilgebildes;
- Fig. 4: eine zweite Ausführungsform des Textilgebildes;
- Fig. 5: eine dritte Ausführungsform des Textilgebildes;
- Fig. 6: eine vierte Ausführungsform des Textilgebildes;

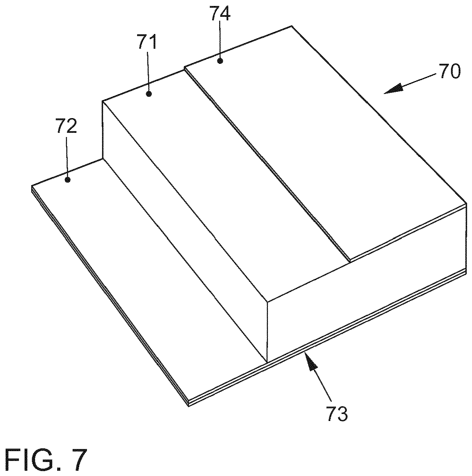

- Fig. 7: eine fünfte Ausführungsform des Textilgebildes, dessen einzelne Schichten zur besseren Darstellung unterschiedliche Längen aufweisen.

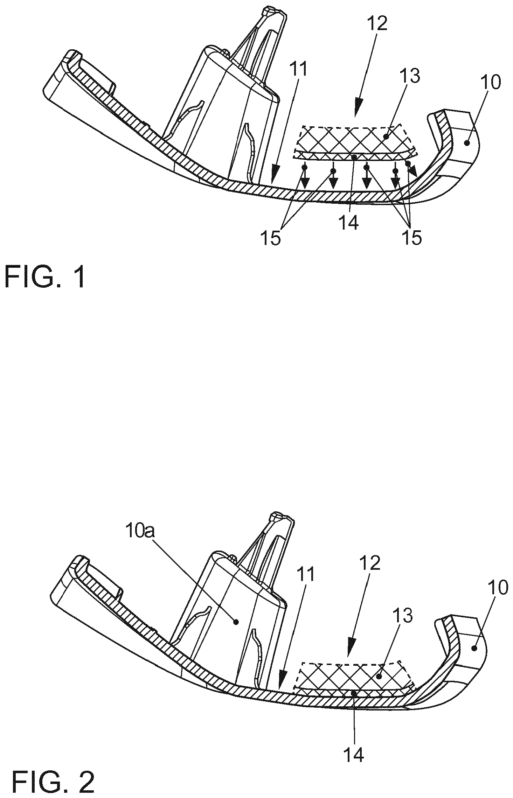

Die Fign. 1 und 2 zeigen ein Verkleidungselement 10 für einen Fahrgastraum eines Kraftfahrzeugs. Das Verkleidungselement 10 kann beispielsweise zur Verkleidung einer Karosseriesäule, insbesondere einer A-Säule, vorgesehen sein. Zur Befestigung an der Karosseriesäule verfügt das Verkleidungselement 10 an seiner Rückseite 11 über einen Cliphalter 10a für einen Befestigungsclip. Auf die Rückseite 11 des Verkleidungselements 10 kann ein Textilgebilde 12 montiert werden. Das Textilgebilde 12 weist eine akustische Dämmschicht 13 und eine Fragmentschutzschicht 14 auf, die zusammen einen Verbund bilden. Zur Montage des Textilgebildes 12 an dem Verkleidungselement 10 wird das Textilgebilde 12 in Richtung von Pfeilen 15 an das Verkleidungselement 10 herangeführt (siehe Fig. 1) und schließlich auf dem Verkleidungselement 10 platziert (siehe Fig. 2). Zur Befestigung des Textilgebildes 12 an dem Verkleidungselement 10 kann an der Fragmentschutzschicht 14 eine hier nicht näher dargestellte Klebeschicht angebracht sein. Da die akustische Dämmschicht 13 und die Fragmentschutzschicht 14 einen Verbund bilden, erfolgt ihre Montage an dem Verkleidungselement 10 gleichzeitig.

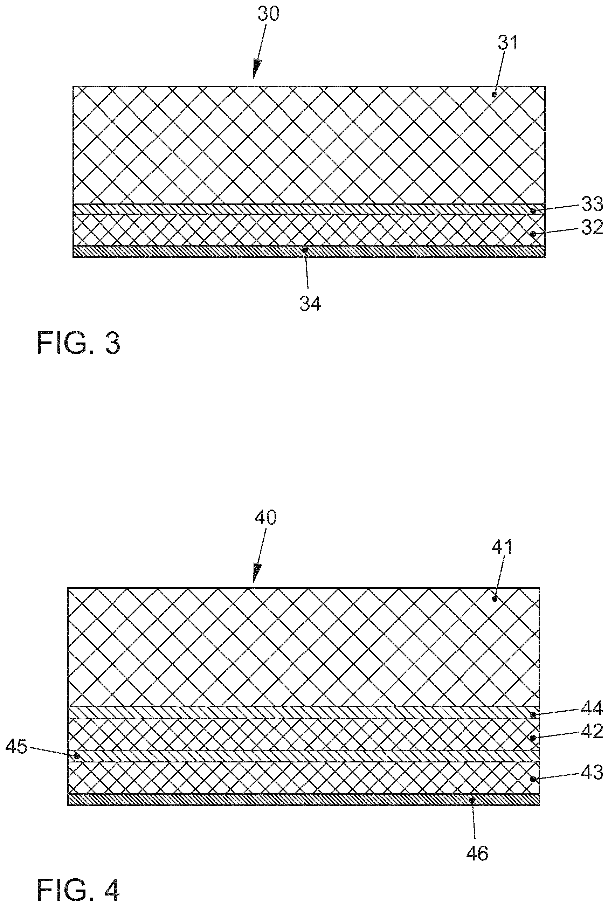

Fig. 3 zeigt eine erste Ausführungsform eines Textilgebildes 30 mit einer akustischen Dämmschicht 31 und einer Fragmentschutzschicht 32. Die Dämmschicht 31 und die Fragmentschutzschicht 32 sind mit einer Verbindungsschicht 33 miteinander verbunden und bilden somit einen Verbund. Unterhalb der Fragmentschutzschicht 32 schließt sich eine Klebeschicht 34 an, mit der das Textilgebilde 30 auf der Rückseite des hier nicht näher dargestellten Verkleidungselements befestigt werden kann. Die Dicke der Dämmschicht 31 beträgt ein Vielfaches der Dicke der Fragmentschutzschicht 32, woraus sich eine gute schallabsorbierende Wirkung des Textilgebildes 30 ergibt.

Ein Textilgebilde 40 nach einer zweiten Ausführungsform weist eine Dämmschicht 41 und Fragmentschutzschichten 42 und 43 auf (siehe Fig. 4). Die Fragmentschutzschicht 42 ist mit einer Verbindungsschicht 44 mit der Dämmschicht 41 verbunden. Auf der anderen Seite ist die Fragmentschutzschicht 42 mit einer Fügeschicht 45 mit der Fragmentschutzschicht 43 verbunden. Eine Klebeschicht 46 dient der Befestigung des Textilgebildes 40 an dem Verkleidungselement.

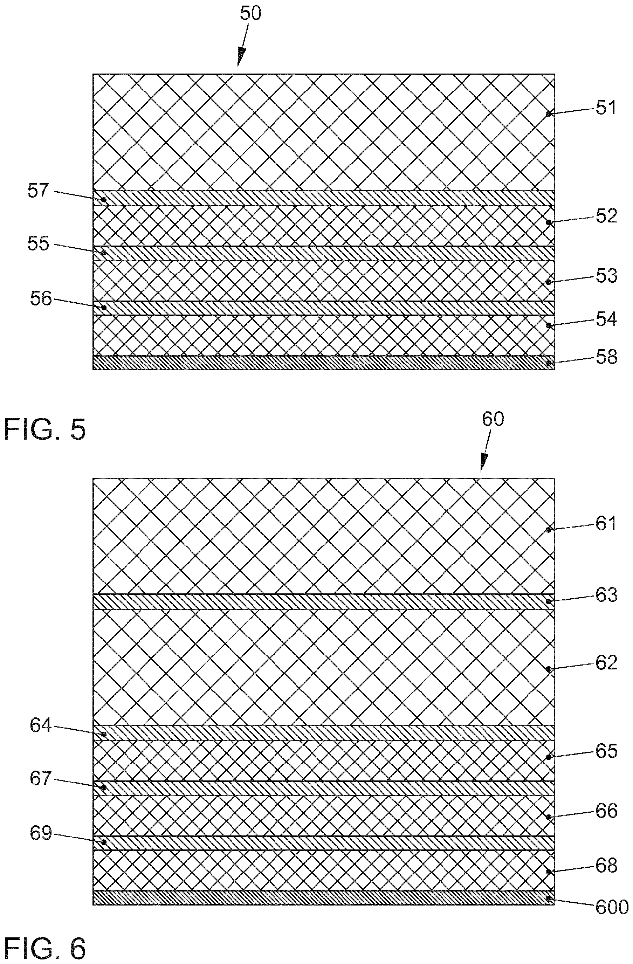

In Fig. 5 ist ein Textilgebilde 50 gemäß einem dritten Ausführungsbeispiel dargestellt, das neben einer Dämmschicht 51 drei Fragmentschutzschichten 52, 53 und 54 aufweist. Die Fragmentschutzschichten 52, 53 und 54 sind mit Fügeschichten 55 und 56 übereinander verbunden. Zwischen der Dämmschicht 51 und der Fragmentschutzschicht 52 ist eine Verbindungsschicht 57 angebracht. Unterhalb der Fragmentschutzschicht 54 befindet sich eine Klebeschicht 58 zur Befestigung des Textilgebildes 50 an dem Verkleidungselement. Die Fragmentschutzschichten 52, 53 und 54 weisen identische standardisierte Abmessungen auf. Folglich kann durch die übereinander angeordneten Fragmentschutzschichten 52, 53 und 54 die Fragmentschutzwirkung erhöht werden, ohne dass Fragmentschutzschichten unterschiedlicher Abmessungen, insbesondere unterschiedlicher Dicke, hergestellt werden müssen.

Fig. 6 zeigt eine vierte Ausführungsform eines Textilgebildes 60. Es weist zwei Dämmschichten 61 und 62 auf, die mit einer Befestigungsschicht 63 miteinander verbunden sind. Die Dämmschichten 61 und 62 weisen ebenfalls identische standardisierte Abmessungen auf. Somit wird durch die Übereinanderlagerung der Dämmschichten 61 und 62 die schallabsorbierende Wirkung des Textilgebildes 60 verbessert. Es müssen keine Dämmschichten mit unterschiedlichen Abmessungen, insbesondere unterschiedlicher Dicke, hergestellt werden. Unter der Dämmschicht 62 ist eine Verbindungsschicht 64 vorgesehen, mittels derer eine Fragmentschutzschicht 65 mit der Dämmschicht 62 verbunden ist. Eine weitere Fragmentschutzschicht 66 ist mit einer Fügeschicht 67 an der Fragmentschutzschicht 65 verbunden. Eine andere Fragmentschutzschicht 68 ist mit einer Fügeschicht 69 mit der Fragmentschutzschicht 66 verbunden. Im Anschluss an die Fragmentschutzschicht 68 folgt eine Klebeschicht 600 zur Befestigung des Textilgebildes 60 an dem Verkleidungselement.

Ein Textilgebilde 70 nach einer fünften Ausführungsform weist eine Dämmschicht 71 und eine Fragmentschutzschicht 72 auf. Eine zwischen der Dämmschicht 71 und der Fragmentschutzschicht 72 vorgesehene Verbindungsschicht ist hier aus Übersichtlichkeitsgründen nicht dargestellt. Unterhalb der Fragmentschutzschicht 72 befindet sich eine Klebeschicht 73 zur Befestigung des Textilgebildes 70 an dem Verkleidungsteil. Auf der Dämmschicht 71 ist eine Schutzschicht 74 aufgebracht. Sie schützt die freie Seite der Dämmschicht 71 beim Transport und bei der Montage des Textilgebildes 70.

### Bezugszeichenliste

- 10: Verkleidungselement
- 10a: Cliphalter
- 11: Rückseite
- 12: Textilgebilde
- 13: Dämmschicht
- 14: Fragmentschutzschicht
- 15: Pfeil

- 30: Textilgebilde
- 31: Dämmschicht
- 32: Fragmentschutzschicht
- 33: Verbindungsschicht
- 34: Klebeschicht

- 40: Textilgebilde
- 41: Dämmschicht
- 42: Fragmentschutzschicht
- 43: Fragmentschutzschicht
- 44: Verbindungsschicht
- 45: Fügeschicht
- 46: Klebeschicht

- 50: Textilgebilde
- 51: Dämmschicht
- 52: Fragmentschutzschicht
- 53: Fragmentschutzschicht
- 54: Fragmentschutzschicht
- 55: Fügeschicht
- 56: Fügeschicht
- 57: Verbindungsschicht
- 58: Klebeschicht

- 60: Textilgebilde
- 61: Dämmschicht
- 62: Dämmschicht
- 63: Befestigungsschicht
- 64: Verbindungsschicht
- 65: Fragmentschutzschicht
- 66: Fragmentschutzschicht
- 67: Fügeschicht
- 68: Fragmentschutzschicht
- 69: Fügeschicht

- 70: Textilgebilde
- 71: Dämmschicht
- 72: Fragmentschutzschicht
- 73: Klebeschicht
- 74: Schutzschicht

- 600: Klebeschicht

## Patentansprüche

1. Textilgebilde (12, 30, 40, 50, 60, 70) zur Montage an einer einem Fahrgastraum eines Kraftfahrzeugs abgewandten Rückseite (11) eines Verkleidungselements (10) mit mindestens einer akustischen Dämmschicht (13, 31, 41, 51, 61, 71),
**dadurch gekennzeichnet,**
**dass** das Textilgebilde (12, 30, 40, 50, 60, 70) ein biegeschlaffes Bauteil ist und mindestens eine Fragmentschutzschicht (14, 32, 42, 43, 52, 53, 54, 65, 66, 68, 72), welche bei einer stoßartigen Belastung des Verkleidungselements (10) die Verbreitung von Fragmenten im Fahrgastraum reduziert, aufweist,
und **dass** die mindestens eine akustische Dämmschicht (13, 31, 41, 51, 61, 71) und die mindestens eine Fragmentschutzschicht (14, 32, 42, 43, 52, 53, 54, 65, 66, 68, 72) einen Verbund bilden.

2. Textilgebilde (12, 30, 40, 50, 60, 70) nach dem vorhergehenden Anspruch, **dadurch gekennzeichnet, dass** die mindestens eine Dämmschicht (13, 31, 41, 51, 61, 71) und/oder die mindestens eine Fragmentschutzschicht (14, 32, 42, 43, 52, 53, 54, 65, 66, 68, 72) aus einem Vlies, Gewebe, Gewirke, Gestrick, Gelege oder Geflecht hergestellt ist.

3. Textilgebilde (12, 30, 40, 50, 60, 70) nach einem der vorhergehenden Ansprüche, **dadurch gekennzeichnet, dass** es aus Glasfasern, Polymerfasern, Naturfasern, Mineralfasern und/oder aus diesen Fasern erzeugten Rovings hergestellt ist.

4. Textilgebilde (12, 30, 40, 50, 60, 70) nach einem der vorhergehenden Ansprüche, **dadurch gekennzeichnet, dass** die mindestens eine Dämmschicht (13, 31, 41, 51, 61, 71) und die mindestens eine Fragmentschutzschicht (14, 32, 42, 43, 52, 53, 54, 65, 66, 68, 72) mit einer Verbindungsschicht (33, 44, 57, 64) miteinander verbunden sind.

5. Textilgebilde (12, 30, 40, 50, 60, 70) nach einem der vorhergehenden Ansprüche, **dadurch gekennzeichnet, dass** die Dicke der mindestens einen Dämmschicht (13, 31, 41, 51, 61, 71) ein Vielfaches der Dicke der mindestens einen Fragmentschutzschicht (14, 32, 42, 43, 52, 53, 54, 65, 66, 68, 72) beträgt oder übersteigt.

6. Textilgebilde (12, 30, 40, 50, 60, 70) nach einem der vorhergehenden Ansprüche, **dadurch gekennzeichnet, dass** die Fragmentschutzschicht (14, 32, 42, 43, 52, 53, 54, 65, 66, 68, 72) wenigstens teilweise mit einer Klebeschicht (33, 46, 58, 73, 600) versehen ist.

7. Textilgebilde (40, 50, 60) nach einem der vorhergehenden Ansprüche, **dadurch gekennzeichnet, dass** mehrere Fragmentschutzschichten (42, 43, 52, 53, 54, 65, 66, 68) übereinander angeordnet sind, wobei zwischen zwei benachbarten Fragmentschutzschichten (42, 43, 52, 53, 54, 65, 66, 68) eine Fügeschicht (45, 55, 56, 67, 69) aufgebracht ist.

8. Textilgebilde (60) nach einem der vorhergehenden Ansprüche, **dadurch gekennzeichnet, dass** mehrere Dämmschichten (61, 62) übereinander angeordnet sind, wobei zwischen zwei benachbarten Dämmschichten (61, 62) eine Befestigungsschicht (63) aufgebracht ist.

9. Textilgebilde (70) nach einem der vorhergehenden Ansprüche, **dadurch gekennzeichnet, dass** auf der mindestens einen Dämmschicht (71) eine Schutzschicht (74) aufgebracht ist.

10. Verkleidungselement (10) für einen Fahrgastraum eines Kraftfahrzeugs, insbesondere zur Verkleidung einer Karosseriesäule, **dadurch gekennzeichnet, dass** das Verkleidungselement ein Textilgebilde (12, 30, 40, 50, 60, 70) nach einem der Ansprüche 1 bis 9 aufweist.

11. Verfahren zur Herstellung eines Textilgebildes (12, 30, 40, 50, 60, 70) nach einem der Ansprüche 1 bis 9, **gekennzeichnet durch** folgende Schritte:
a) Herstellen der mindestens einen Dämmschicht (13, 31, 41, 51, 61, 71) und der mindestens einen Fragmentschutzschicht (14, 32, 42, 43, 52, 53, 54, 65, 66, 68, 72),
b) Aufbringen einer Verbindungsschicht (44, 57, 64) auf die mindestens eine Dämmschicht (13, 31, 41, 51, 61, 71) und/oder auf die mindestens eine Fragmentschutzschicht (14, 32, 42, 43, 52, 53, 54, 65, 66, 68, 72),
c) Verbinden der mindestens einen Dämmschicht (13, 31, 41, 51, 61, 71) und der mindestens einen Fragmentschutzschicht (14, 32, 42, 43, 52, 53, 54, 65, 66, 68, 72).

12. Verfahren nach Anspruch 11, **dadurch gekennzeichnet, dass** mehrere benachbarte Fragmentschutzschichten (42, 43, 52, 53, 54, 65, 66, 68) hergestellt werden, wobei
a) auf die zuvor hergestellte Fragmentschutzschicht (42, 52, 53, 65, 66) eine Fügeschicht (45, 55, 56, 67, 69) aufgebracht wird,
b) eine weitere Fragmentschutzschicht (43, 53, 54, 66, 68) auf die Fügeschicht (45, 55, 56, 67, 69) aufgebracht und mit der zuvor hergestellten Fragmentschutzschicht (42, 52, 53, 65, 66) verbunden wird,
c) Wiederholen von Schritt a) und b) bis die gewünschte Anzahl von Fragmentschutzschichten (42, 43, 52, 53, 54, 65, 66, 68) hergestellt ist.

13. Verfahren nach einem der Ansprüche 11 bis 12, **dadurch gekennzeichnet, dass** auf die mindestens eine Fragmentschutzschicht (14, 32, 43, 54, 68, 72) die Klebeschicht (33, 46, 58, 73, 600) aufgebracht wird, wobei die Klebeschicht (33, 46, 58, 73, 600) mindestens teilweise die freie Seite der Fragmentschutzschicht (14, 32, 43, 54, 68, 72) abdeckt.

14. Verfahren nach einem der Ansprüche 11 bis 13, **dadurch gekennzeichnet, dass** mehrere benachbarte Dämmschichten (61, 62) hergestellt werden, wobei
a) auf die zuvor hergestellte Dämmschicht (61) eine Befestigungsschicht (63) aufgebracht wird,
b) eine weitere Dämmschicht (62) auf die Befestigungsschicht (63) aufgebracht und mit der zuvor hergestellten Dämmschicht (61) verbunden wird,
c) Wiederholen von Schritt a) und b) bis die gewünschte Anzahl von Dämmschichten (61, 62) hergestellt ist.

15. Verfahren nach einem der Ansprüche 11 bis 14, **dadurch gekennzeichnet, dass** auf die mindestens eine Dämmschicht (71) eine Schutzschicht (74) aufgebracht wird.

## Claims

1. Textile fabric (12, 30, 40, 50, 60, 70) for mounting on a rear side (11), facing away from a passenger compartment of a motor vehicle, of a trim element (10) having at least one acoustic insulating layer (13, 31, 41, 51, 61, 71),
**characterized in that**
the textile fabric (12, 30, 40, 50, 60, 70) is a flexible component and has at least one fragment protection layer (14, 32, 42, 43, 52, 53, 54, 65, 66, 68, 72) which reduces the spreading of fragments in the passenger compartment in the event of a sudden load on the trim element (10),
**and that** the at least one acoustic insulating layer (13, 31, 41, 51, 61, 71) and the at least one fragment protection layer (14, 32, 42, 43, 52, 53, 54, 65, 66, 68, 72) form a composite.

2. Textile fabric (12, 30, 40, 50, 60, 70) according to the preceding claim, **characterized in that** the at least one insulating layer (13, 31, 41, 51, 61, 71) and/or the at least one fragment protection layer (14, 32, 42, 43, 52, 53, 54, 65, 66, 68, 72) is made of a non-woven fabric, woven fabric, warp knitted fabric, weft knitted fabric, scrim, or braid.

3. Textile fabric (12, 30, 40, 50, 60, 70) according to any one of the preceding claims, **characterized in that** it is produced from glass fibers, polymer fibers, natural fibers, mineral fibers and/or rovings produced from these fibers.

4. Textile fabric (12, 30, 40, 50, 60, 70) according to any one of the preceding claims, **characterized in that** the at least one insulating layer (13, 31, 41, 51, 61, 71) and the at least one fragment protection layer (14, 32, 42, 43, 52, 53, 54, 65, 66, 68, 72) are bonded to one another with a connecting layer (33, 44, 57, 64).

5. Textile fabric (12, 30, 40, 50, 60, 70) according to any one of the preceding claims, **characterized in that** the thickness of the at least one insulating layer (13, 31, 41, 51, 61, 71) is or exceeds a multiple of the thickness of the at least one fragment protection layer (14, 32, 42, 43, 52, 53, 54, 65, 66, 68, 72).

6. Textile fabric (12, 30, 40, 50, 60, 70) according to any one of the preceding claims, **characterized in that** the fragment protection layer (14, 32, 42, 43, 52, 53, 54, 65, 66, 68, 72) is at least partially provided with an adhesive layer (33, 46, 58, 73, 600).

7. Textile fabric (40, 50, 60) according to any one of the preceding claims, **characterized in that** a plurality of fragment protection layers (42, 43, 52, 53, 54, 65, 66, 68) is arranged one above the other, wherein a joining layer (45, 55, 56, 67, 69) is applied between two adjacent fragment protective layers (42, 43, 52, 53, 54, 65, 66, 68).

8. Textile fabric (60) according to one of the preceding claims, **characterized in that** a plurality of insulating layers (61, 62) is arranged one above the other, wherein a fastening layer (63) is applied between two adjacent insulating layers (61, 62).

9. Textile fabric (70) according to one of the preceding claims, **characterized in that** a protection layer (74) is applied to the at least one insulating layer (71).

10. Trim element (10) for a passenger compartment of a motor vehicle, in particular for covering a body column, **characterized in that** the trim element has a textile fabric (12, 30, 40, 50, 60, 70) according to any one of claims 1 to 9.

11. Method for producing a textile fabric (12, 30, 40, 50, 60, 70) according to any one of claims 1 to 9, **characterized by** the following steps:
a) producing the at least one insulating layer (13, 31, 41, 51, 61, 71) and the at least one fragment protection layer (14, 32, 42, 43, 52, 53, 54, 65, 66, 68, 72),
b) applying a connecting layer (44, 57, 64) to the at least one insulating layer (13, 31, 41, 51, 61, 71) and/or to the at least one fragment protection layer (14, 32, 42, 43, 52, 53, 54, 65, 66, 68, 72),
c) connecting the at least one insulating layer (13, 31, 41, 51, 61, 71) and the at least one fragment protection layer (14, 32, 42, 43, 52, 53, 54, 65, 66, 68, 72).

12. Method according to claim 11, **characterized in that** a plurality of adjacent fragment protection layers (42, 43, 52, 53, 54, 65, 66, 68) are produced, wherein
a) a joining layer (45, 55, 56, 67, 69) is applied to the previously produced fragment protection layer (42, 52, 53, 65, 66),
b) a further fragment protection layer (43, 53, 54, 66, 68) is applied to the joining layer (45, 55, 56, 67, 69) and is connected to the previously produced fragment protection layer (42, 52, 53, 65, 66),
c) steps a) and b) are repeated until the desired number of fragment protective layers (42, 43, 52, 53, 54, 65, 66, 68) is produced.

13. Method according to any one of claims 11 to 12, **characterized in that** the adhesive layer (33, 46, 58, 73, 600) is applied to the at least one fragment protection layer (14, 32, 43, 54, 68, 72), wherein the adhesive layer (33, 46, 58, 73, 600) at least partially covers the free side of the fragment protection layer (14, 32, 43, 54, 68, 72).

14. Method according to one of claims 11 through 13, **characterized in that** a plurality of adjacent insulating layers (61, 62) are produced, wherein
a) a fastening layer (63) is applied to the previously produced insulating layer (61),
b) a further insulating layer (62) is applied to the fastening layer (63) and is connected to the previously produced insulating layer (61),
c) steps a) and b) are repeated until the desired number of insulating layers (61, 62) is produced.

15. Method according to any one of claims 11 to 14, **characterized in that** the at least one protection layer (71) is arranged on the at least one insulating layer (74).

## Revendications

1. Structure textile (12, 30, 40, 50, 60, 70) destinée à être montée sur un côté arrière (11) d'un élément d'habillage (10) opposé à un habitacle d'un véhicule à moteur, comprenant au moins une couche d'isolation acoustique (13, 31, 41, 51, 61, 71),
**caractérisée en ce**
**que** la structure textile (12, 30, 40, 50, 60, 70) est un composant souple en flexion et présente au moins une couche protectrice de fragment (14, 32, 42, 43, 52, 53, 54, 65, 66, 68, 72), qui, lors d'une charge provoquée par un choc de l'élément d'habillage (10), réduit la diffusion de fragments dans l'habitacle,
**et que** l'au moins une couche d'isolation acoustique (13, 31, 41, 51, 61, 71) et l'au moins une couche protectrice de fragment (14, 32, 42, 43, 52, 53, 54, 65, 66, 68, 72) forment un composite.

2. Structure textile (12, 30, 40, 50, 60, 70) selon la revendication précédente, **caractérisée en ce que** l'au moins une couche d'isolation (13, 31, 41, 51,61, 71) et/ou l'au moins une couche protectrice de fragment (14, 32, 42, 43, 52, 53, 54, 65, 66, 68, 72) sont fabriquées à partir d'un matériau non tissé, d'un tissu, d'un tricot plat, d'un tissu tricoté, d'une natte ou d'un maillage.

3. Structure textile (12, 30, 40, 50, 60, 70) selon l'une quelconque des revendications précédentes, **caractérisée en ce qu**'elle est fabriquée à partir de fibres de verre, de fibres de polymère, de fibres naturelles, de fibres minérales et/ou de boudins produits à partir de ces fibres.

4. Structure textile (12, 30, 40, 50, 60, 70) selon l'une quelconque des revendications précédentes, **caractérisée en ce que** l'au moins une couche d'isolation (13, 31, 41, 51, 61, 71) et l'au moins une couche protectrice de fragment (14, 32, 42, 43, 52, 53, 54, 65, 66, 68, 72) sont reliées l'une à l'autre au moyen d'une couche de liaison (33, 44, 57, 64).

5. Structure textile (12, 30, 40, 50, 60, 70) selon l'une quelconque des revendications précédentes, **caractérisée en ce que** l'épaisseur de l'au moins une couche d'isolation (13, 31, 41, 51, 61, 71) est supérieure ou égale à un multiple de l'épaisseur de l'au moins une couche protectrice de fragment (14, 32, 42, 43, 52, 53, 54, 65, 66, 68, 72).

6. Structure textile (12, 30, 40, 50, 60, 70) selon l'une quelconque des revendications précédentes, **caractérisée en ce que** la couche protectrice de fragment (14, 32, 42, 43, 52, 53, 54, 65, 66, 68, 72) est dotée au moins partiellement d'une couche adhésive (33, 46, 58, 73, 600).

7. Structure textile (40, 50, 60) selon l'une quelconque des revendications précédentes, **caractérisée en ce que** plusieurs couches protectrices de fragment (42, 43, 52, 53, 54, 65, 66, 68) sont agencées l'une sur l'autre, une couche de jonction (45, 55, 56, 67, 69) étant appliquée entre deux couches protectrices de fragment (42, 43, 52, 53, 54, 65, 66, 68) voisines.

8. Structure textile (60) selon l'une quelconque des revendications précédentes, **caractérisée en ce que** plusieurs couches d'isolation (61, 62) sont agencées l'une sur l'autre, une couche de fixation (63) étant appliquée entre deux couches d'isolation (61, 62) voisines.

9. Structure textile (70) selon l'une quelconque des revendications précédentes, **caractérisée en ce qu'**une couche de protection (74) est appliquée sur l'au moins une couche d'isolation (71).

10. Élément d'habillage (10) pour un habitacle d'un véhicule à moteur, en particulier pour l'habillage d'un montant de carrosserie, **caractérisé en ce que** l'élément d'habillage présente une structure textile (12, 30, 40, 50, 60, 70) selon l'une quelconque des revendications 1 à 9.

11. Procédé de fabrication d'une structure textile (12, 30, 40, 50, 60, 70) selon l'une quelconque des revendications 1 à 9, **caractérisé par** les étapes suivantes :
a) fabrication de l'au moins une couche d'isolation (13, 31, 41, 51, 61, 71) et de l'au moins une couche protectrice de fragment (14, 32, 42, 43, 52, 53, 54, 65, 66, 68, 72),
b) application d'une couche de liaison (44, 57, 64) sur l'au moins une couche d'isolation (13, 31, 41, 51, 61, 71) et/ou sur l'au moins une couche protectrice de fragment (14, 32, 42, 43, 52, 53, 54, 65, 66, 68, 72),
c) liaison de l'au moins une couche d'isolation (13, 31, 41, 51, 61, 71) et de l'au moins une couche protectrice de fragment (14, 32, 42, 43, 52, 53, 54, 65, 66, 68, 72).

12. Procédé selon la revendication 11, **caractérisé en ce que** plusieurs couches protectrices de fragment (42, 43, 52, 53, 54, 65, 66, 68) voisines sont fabriquées, dans lequel
a) une couche de jonction (45, 55, 56, 67, 69) est appliquée sur la couche protectrice de fragment (42, 52, 53, 65, 66) fabriquée auparavant,
b) une autre couche protectrice de fragment (43, 53, 54, 66, 68) est appliquée sur la couche de jonction (45, 55, 56, 67, 69) et reliée avec la couche protectrice de fragment (42, 52, 53, 65, 66) fabriquée auparavant,
c) répétition des étapes a) et b) jusqu'à ce que le nombre souhaité de couches protectrices de fragment (42, 43, 52, 53, 54, 65, 66, 68) soit fabriqué.

13. Procédé selon l'une quelconque des revendications 11 à 12, **caractérisé en ce que** la couche adhésive (33, 46, 58, 73, 600) est appliquée sur l'au moins une couche protectrice de fragment (14, 32, 43, 54, 68, 72), la couche adhésive (33, 46, 58, 73, 600) recouvrant au moins partiellement le côté libre de la couche protectrice de fragment (14, 32, 43, 54, 68, 72).

14. Procédé selon l'une quelconque des revendications 11 à 13, **caractérisé en ce que** plusieurs couches d'isolation (61, 62) voisines sont fabriquées, dans lequel
a) une couche de fixation (63) est appliquée sur la couche d'isolation (61) fabriquée auparavant,
b) une autre couche d'isolation (62) est appliquée sur la couche de fixation (63) et reliée avec la couche d'isolation (61) fabriquée auparavant,
c) répétition des étapes a) et b) jusqu'à ce que le nombre souhaité de couches d'isolation (61, 62) soit fabriqué.

15. Procédé selon l'une quelconque des revendications 11 à 14, **caractérisé en ce qu**'une couche de protection (74) est appliquée sur l'au moins une couche d'isolation (71).
